# EUROPÄISCHE PATENTSCHRIFT

(11) **EP 2 158 099 B1**
(45) Veröffentlichungstag und Bekanntmachung des Hinweises auf die Patenterteilung: **17.04.2013**
(21) Anmeldenummer: 08701324.9
(22) Anmeldetag: 09.01.2008
(51) Int. Cl.: B60G 17/052, F16F 9/04, F16F 9/46

(54) **LUFTFEDER- UND DÄMPFEREINHEIT MIT VORGESTEUERTEM HAUPTVENTIL**
AIR SPRING AND DAMPER UNIT WITH PILOT-CONTROLLED MAIN VALVE
ENSEMBLE AMORTISSEUR ET SUSPENSION PNEUMATIQUE À SOUPAPE PRINCIPALE PILOTÉE

(30) Priorität: 28.04.2007 DE 102007020111
(43) Veröffentlichungstag der Anmeldung: 03.03.2010
(73) Patentinhaber: Continental Teves AG & Co. OHG, 60488 Frankfurt (DE)
(72) Erfinder: SCHALLMEIER, Christian, 31535 Neustadt (DE)
(86) Internationale Anmeldenummer: PCT/EP2008/050158
(87) Internationale Veröffentlichungsnummer: WO 2008/131975

(56) Entgegenhaltungen:
- EP-A- 1 729 030
- WO-A-2006/061098
- DE-A1- 4 417 796

## Beschreibung

Die Erfindung betrifft eine Luftfeder- und Dämpfereinheit für Fahrzeuge, wobei die Luftfeder- und Dämpfereinheit mindestens zwei mit Druckluft gefüllte Arbeitsräume aufweist, die jeweils mindestens teilweise durch Rollbälge begrenzt werden und die Rollbälge unter Bildung einer Rollfalte mindestens teilweise auf Abrollkonturen vorgegebener und als Zylinderflächen ausgebildeter Gehäuseteile abrollen, wobei die Arbeitsräume untereinander über Ventile bzw. Ventilschaltungen verbunden sind.

Solche Luftfeder- und Dämpfereinheit in Kraftfahrzeugen sind beispielsweise aus dem Dokument WO 2006/061098 A bekannt. Luftfeder- und Dämpfereinheiten dienen z. B. in Personenkraftwagen als besonders komfortable Federungselemente und sorgen für ein angenehmes Fahrgefühl bei einer Federung, die je nach Straßenverhältnissen zwischen einem "weichen" und "harten" Federungsverhalten angepasst werden kann. Dies geschieht in der Regel durch Ventilen/Drosselventile im Strömungsweg zwischen den einzelnen Arbeitsräumen, wodurch die Dämpfung beeinflusst bzw. verändert wird, die durch die dissipative Strömungen zwischen den einzelnen Arbeitsräumen entsteht.

Diese Ventile können dabei sowohl als verstellbare und angetriebene Ventile bzw. Drosselventile ausgebildet sein, als auch als lediglich federbeaufschlagte Überdruck- oder Blow-Off-Ventile, die bei einem bestimmten Druck öffnen. Die Ventile bestehen üblicherweise aus mindestens dem Ventilkolben oder -körper, aus der Ventilfeder und aus einem Ventilgehäuse und weisen gegebenenfalls einem zusätzlichen Antrieb auf, wobei dann die Verstellung in aller Regel elektrisch, also z.B. über Magnete, erfolgt. Einfache Drosselventile können in bekannter Weise aus lediglich verengten Querschnitten, Spalten, Überströmkanten etc. bestehen, wobei natürlich auch aus Ventilkolben, Ventilfeder und Ventilgehäuse bestehende Ventile eine entsprechende Drosselwirkung aufweisen.

Die Auslegung und Steuerung der Charakteristika der Federung und Dämpfung eines solchen Systems ist jedoch ziemlich aufwendig und wird im Allgemeinen durch das Zusammenschalten einer Anzahl von mehr oder weniger unterschiedlich wirkenden Ventilen erreicht, mit denen die dissipativen Strömungen beeinflusst werden können, d.h. mit denen während des Betriebes unterschiedliche Dämpfkraftkennlinien eingestellt werden können.

Die DE 101 15 980 offenbart eine Gasfeder-Dämpfer-Einheit mit einem in einem Zylindergehäuse verschiebbaren und gegenüber letzterem abgedichteten Kolben, der zwei Arbeitsräume unterteilt. Der Dämpferraum ist teilweise von einem Rollbalg nach außen begrenzt. Die im Kolben befindlichen Drosselventile sind dabei so gestaltet, dass abhängig von der Durchströmungsrichtung ein unterschiedlicher Strömungswiderstand vorhanden ist und der Ort des Umschlags von laminarer in turbulente Strömung angepasst wird. Bei den hier gezeigten Drosselventilen handelt es sich um fest eingestellte / eingeformte Drosseln ohne Regelungsfunktion.

In der DE 199 32 717 A1 wird eine Einrichtung offenbart, bei der zwei Arbeitsräume einer Gasfeder-Dämpfer-Einheit mit einem in einem Zylindergehäuse verschiebbaren abgedichteten Kolben unterteilt werden. Der Dämpferraum ist teilweise von einem Rollbalg nach außen begrenzt. Die im Kolben befindlichen Drosselventile sind dabei als mit Federscheiben belastete Ventile gestaltet, wobei die Federscheiben und Ventilquerschnitte abhängig von der Durchströmungsrichtung ausgebildet sind.

Aus der DE 43 34 007 A1 ist eine pneumatische Feder-Dämpfer-Einheit mit elektromagnetisch steuerbaren Überströmventilen bekannt, deren Verschlussorgane durch Ventilfederplättchen gebildet werden. Durch die Ventilfederplättchen verläuft der magnetische Fluss und die Ventilfederplättchen wirken in ihrer Schließlage mit zugeordneten Anlageflächen zusammen. Die Schließkraft ist durch einen steuerbaren Elektromagneten veränderbar, so dass eine Feder-Dämpfer-Einheit mit veränderlicher Abstimmung vorliegt. Mit dieser Feder-Dämpfer-Einheit ist es möglich, die maximale Schließkraft oder Vorspannung einzustellen und zu bestimmen, ab welchem Druck das Ventil öffnet.

Aus der DE 101 35 261 C1 ist eine Gasfeder-Dämpfer-Einheit mit Überströmdrosseln bekannt, die mit federnden Dichtscheiben verschlossen sind. Die federnden Dichtscheiben sind nicht fest eingespannt, sondern durch eine Federkraft nur für einen vorbestimmten Druckdifferenzbereich festgelegt. Nach Überschreiten eines bestimmten Druckes hebt der Einspannbereich ab, wobei die federnde Kraft zur Belastung der Dichtscheibe vorzugsweise durch eine ebenfalls federnde Ringscheibe aufgebracht wird.

Diesen bisherigen Ausführungsformen haftet jedoch der Nachteil an, dass eine Verstellmöglichkeit für die Dämpferkennung abhängig von der jeweiligen Fahrsituation im Sinne einer Umschaltung der Luftdämpfer auf eine andere Dämpfungs-Kennlinie entweder nur in geringem Umfang vorhanden oder überhaupt nicht gegeben ist. Der dynamische Differenzdruck an den Drosselventilen und der Volumenstrom sind maßgeblich für den Energieumsatz durch Dissipation und damit für die Dämpfungsarbeit. Bei der Luftdämpfung sind hohe Drücke und große Volumenströme zur Erzeugung der erforderlichen Dämpfungsarbeit nötig. Eine Beeinflussung der Dämpferkennung, d.h. der Dämpfungs-Kennlinie ist also insbesondere deswegen schwierig, weil bei den hier vorliegenden Gasdämpfungssystemen hohe Drücke und hohe Volumenströme zu schalten sind.

Die DE 10 2005 005 153 A1 offenbart hierzu eine pneumatische Federungs- und Dämpfungseinrichtung für Fahrzeuge, bei der die Verbindung zwischen den Arbeitsräumen eine aus mehreren Ventilen bestehende "Verstellventileinrichtung" aufweist, bei der ein Drosselorgan und ein eine Druckdifferenz an diesem Drosselorgan abgreifendes Druckregelventil vorgesehen ist. Das Drosselorgan ist dabei mit einem weiteren und ansteuerbaren Drosselverstellventil in Reihe geschaltet. Der Hauptvolumenstrom wird dabei vom Druckregelventil gesteuert und ist dem Strömungszweig parallel geschaltet, in dem sich Drosselorgan und ansteuerbares Drosselverstellventil befinden. Die Vorspannung des Druckregelventils steht im Gleichgewicht mit dem Druckabfall über dem Drosselorgan, so dass das Druckregelventils bei zunehmender Durchflussmenge durch das Drosselorgan weiter öffnet und somit die Durchflussmenge durch das Drosselverstellventil im Wesentlichen konstant bleibt. Nachteilig hierbei ist es, dass der Hauptvolumenstrom von einem Druckregelventil gesteuert wird, welches selbst in Grunde nicht druckabhängig, sondern lediglich durch die Änderung des Querschnitts einer Drossel (Drosselverstellventil) beeinflusst wird. Damit erfolgt insgesamt eine Verstellbarkeit der Strömung zwischen den Arbeitsräumen nicht druckabhängig, also "mit Rückkopplung" in Form einer Regelung mit, sondern lediglich über die Verstellung eines Drosselverstellventils, d.h. in Form einer Steuerung.

Für die Erfindung bestand also die Aufgabe, eine Luftfeder- und Dämpfereinheit für Fahrzeuge bereitzustellen, bei der eine gute Verstellbarkeit im Sinne einer Regelung der Dämpferkennung erreicht wird, bei der neben großen Volumenströmen zwischen den Arbeitskammern auch große Druckdifferenzen geschaltet werden können, und die eine Anpassung und Reaktion auf unterschiedliche Untergrund- und Fahrsituationen ermöglicht.

Gelöst wird die Aufgabe durch die Merkmale des Hauptanspruchs. Vorteilhafte Weiterbildungen sind in den Unteransprüchen offenbart.

Hierbei ist innerhalb der Ventile/Ventilschaltungen mindestens jeweils
a) ein erster Strömungsweg zur Verbindung der Arbeitsräume vorgesehen ist, der ein fest eingestelltes Drosselventil aufweist, dass
b) ein zweiter Strömungsweg zur Verbindung der Arbeitsräume vorgesehen ist, in dem ein weiteres fest eingestelltes Drosselventil und ein druckabhängig öffnendes Steuerventil in Reihe geschaltet sind, wobei das Steuerventil abhängig von der Druckdifferenz zwischen den beiden Arbeitsräumen öffnet, und dass
c) ein dritter Strömungsweg zur Verbindung der Arbeitsräume vorgesehen ist, der ein druckabhängig öffnendes Ventil aufweist, welches abhängig von dem durch das Steuerventil erzeugten Steuerdruck geöffnet wird,
wobei die Strömungswege zur Verbindung der Arbeitsräume parallel geschaltet sind.

Durch eine solche Ausbildung erfolgt die Verstellung des Ventils im Hauptströmungsweg, nämlich des druckabhängig öffnenden Arbeitsventils im dritten Strömungsweg, mit Hilfe der abhängig von Druckdifferenz zwischen den beiden Arbeitsräumen veränderten Durchflusscharakteristik des Steuerventils und somit im Sinne einer direkt druckabhängigen Regelung.

Die besonderen Vorteile dieser Schaltung liegen darin, dass die Anpassung der Dämpfkräfte durch eine Verstellung des möglichen Volumenstroms erfolgt, nämlich dadurch, dass ein großer Ventilquerschnitt (Arbeitsventil bzw. Hauptventil) durch ein kleines Steuerventil kontrolliert wird. Dadurch wird eine deutliche Verringerung der zur Verstellung benötigten Energie erreicht.

Die Verstellung basiert darauf, dass bei geschlossenem Steuerventil keine Druckdifferenz über das fest eingestellte Drosselventil (Vorblende) im zweiten Strömungsweg abfällt. In diesem Fall ergibt sich keine Druckdifferenz und somit auch keine Öffnungskraft am großen Hauptventilkolben. Die Folge ist eine geringer Volumenstrom durch die gesamte, durch alle Strömungswege und Ventile gebildete "Drossel" und somit eine hohe Dämpfkraft. Bei vollständig geöffnetem Steuerventil fällt eine große Druckdifferenz über der Vorblende ab. Am Hauptventilkolben entsteht dann eine große Druckdifferenz und somit ein großer Strömungsquerschnitt. Der Dämpfer erzeugt nur noch eine geringe Dämpfkraft. Ein wesentlicher wirtschaftlicher Vorteil dieser Schaltung besteht darin, dass ein separates Blow-Off-Ventil / Überdruckventil eingespart werden kann.

Eine vorteilhafte Ausbildung besteht darin, dass der Öffnungsdruck des druckabhängig öffnenden Steuerventils einstellbar ist. Damit können die Dämpfungskennlinien in einem weiten Bereich beeinflusst und zwischen einem "weichen" und "harten" Federungs- bzw. Dämpfungsverhalten angepasst werden.

Eine weitere vorteilhafte Ausbildung besteht darin, dass das Steuerventil einen federbeaufschlagten Ventilkörper aufweist, wobei der Öffnungsdruck durch einen auf den Ventilkörper gegen den Federdruck einwirkenden Elektromagneten einstellbar ist

Damit ist das zur Vorsteuerung eingesetzte und direkt der Druckdifferenz von Gegendruck und Zwischen- bzw. Steuerdruck ausgesetzte Ventil als elektrisches Ventil ausgebildet und somit steuerbar. Steigt die genannte Druckdifferenz an, wird der Steuerquerschnitt weiter geöffnet und die Dämpfkraft sinkt. Liegt kein elektrischer Strom an (unbestromter Fall) ist die gesamte Verbindung zwischen den beiden Arbeitsräumen bis auf einen konstanten Bypass, das ist das fest eingestelltes Drosselventil im ersten Strömungsweg, vollständig geschlossen.

Das Steuerventil ist über eine Feder mit einer Vorspannkraft versehen und so konstruiert, dass durch die Bestromung des Elektromagneten die Vorspannung in mehr oder weniger starker Weise aufgehoben wird. Dadurch öffnet das Ventil bei geringeren Druckdifferenzen. Die Folge ist eine ganzheitliche Abflachung der Dämpfkraft-Geschwindigkeits-Kennlinie im Sinne der gewünschten breiten Einstellbarkeit zwischen "weichen" und "harten" Federungs- bzw. Dämpfungsverhalten.

Natürlich bietet diese Ventilschaltung auch eine Ausfallsicherung (Fail-Safe-Function) im Sinnen eine Umschaltung auf eine als fahrsicher eingestuften "harten" Kennung. Im Falle eines Stromverlustes wird ein hartes Federungs- bzw. Dämpfungsverhalten dadurch erreicht, dass das Steuerventil ab einer bestimmten Druckdifferenz seine Vorspannung überwindet und geöffnet wird.

Es versteht sich von selbst, dass eine erfindungsgemäße Gestaltung der Verbindung bzw. der Strömungswegen zwischen den Arbeitsräumen in beiden Strömungsrichtungen, also für die Druckstufe (Einfederung) und für die Zugstufe (Ausfederung) erfolgen kann, wobei die Abstimmungen der Ventile natürlich im Federungs- bzw. Dämpfungsverhalten für die Druckstufe und die Zugstufe unterschiedlich erfolgen.

Anhand eines Ausführungsbeispieles soll die Erfindung näher erläutert werden. Es zeigen
- Fig. 1: eine prinzipielle Darstellung einer Luftfeder- und Dämpfereinheit
- Fig. 2: ein erfindungsgemäße Ventilschaltung einer Luftfeder- und Dämpfereinheit
- Fig. 3: die in der Fig. 2 dargestellte Ventilschaltung mit anderen in der Pneumatik gebräuchlichen Symbolen
- Fig. 4: Dämpfungskennlinien der erfindungsgemäßen Ventilschaltung für die Zugstufe und für die Druckstufe

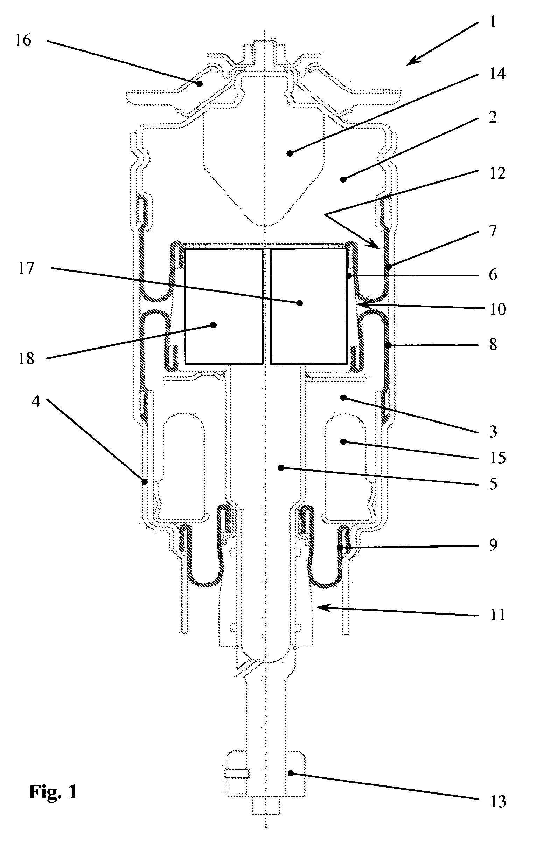

Die Fig. 1 zeigt als prinzipielle Darstellung hierzu eine Luftfeder- und Dämpfereinheit 1 für ein Fahrwerk eines luftgefederten Personenkraftwagens. Die Luftfeder- und Dämpfereinheit weist zwei mit Druckluft gefüllte Arbeitsräume 2 und 3 auf. Die Druckluft wird über einen hier nicht näher dargestellten Kompressor, über zugehörige Ventile und Leitungen in bekannter Weise in die Arbeitsräume gefördert und kann ebenfalls über dieses System abgelassen werden. Üblicherweise besteht ein Luftfeder- oder Niveauregelsystem aus Druckluftanlage / Druckluftversorgung und vier Luftfedermodulen, nämlich für jedes Rad eines, und wird insgesamt über eine Steuerungseinrichtung geregelt.

Die Arbeitsräume 2 und 3 sind in einem gemeinsamen topfförmigen, hier zylindrisch ausgebildeten Gehäuse 4 angeordnet und durch einen am Kopfende einer Kolbenstange 5 befindlichen, rotationssymmetrisch ausgebildeten Trennkolben 6 getrennt. Der Kolben 6 ist innerhalb des zylindrischen Gehäuses 4 axial beweglich. Innerhalb des Kolbens 6 sind Ventile/Ventilschaltungen angeordnet, über die die beiden Arbeitsräume 2 und 3 verbunden sind. Der Kolben 6 und die Kolbenstange 5 werden jeweils durch Rollbälge 7, 8 und 9 innerhalb des zylindrischen Gehäuses abgedichtet und geführt. Die Außenflächen 10 und 11 des Kolbens und der Kolbenstange sowie die Innenfläche 12 des Zylinders sind jeweils über einen für das Abrollen der Rollbälge erforderlichen Bereich als rotationssymmetrische Abrollkonturen ausgebildet.

Zwischen dem Ende des zylindrischen Gehäuses und dem unteren Anschlusspunkt 13 zum Fahrwerk kann ein Faltenbalg zum Schutz gegen Verschmutzungen angeordnet sein.

Die Luftfeder- und Dämpfereinheit weist weiterhin federnd ausgebildete Anschläge 14 und 15 auf, die bei entsprechender Belastung in der Druck- oder in der Zugstufenendlage den Kolbenweg / Federweg begrenzen, damit kein metallischer Kontakt entsteht. Karosserieseitig ist die Luftfeder- und Dämpfereinheit über ein Federbein-Kopflager 16 mit dem Fahrzeug in bekannter Weise verbunden.

Innerhalb des Kolbens 6 sind für jede Strömungsrichtung, wie oben bereits erwähnt, die Ventile/Ventilschaltungen 17 und 18 als Verbindungen zwischen den Arbeitsräumen angeordnet.

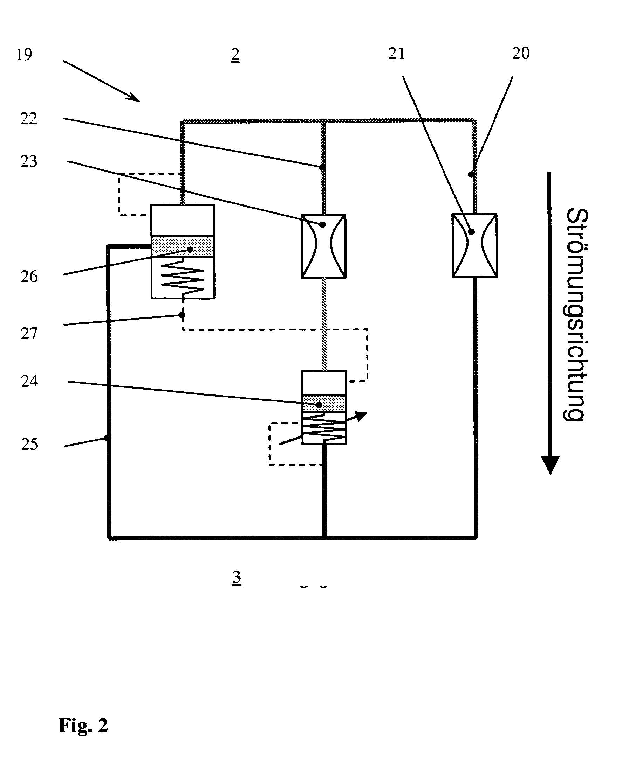

Die Fig. 2 zeigt die Ventilschaltung 19 innerhalb des Ventils 18 für die Druckstufe. Die Ventilschaltung 19 weist einen ersten Strömungsweg 20 zur Verbindung der Arbeitsräume 2 und 3 auf, in dem ein fest eingestelltes Drosselventil 21 als Bypass vorgesehen ist.

Zur Verbindung der Arbeitsräume ist ebenfalls ein zweiter Strömungsweg 22 vorgesehen, in dem ein fest eingestelltes Drosselventil 23 als Vorblende und ein druckabhängig öffnendes Steuerventil 24 in Reihe geschaltet sind. Das Steuerventil 24 weist einen hier nur prinzipiell dargestellten federbeaufschlagten Ventilkörper auf, wobei der Öffnungsdruck gegen die die Federkraft des Steuerventils 24 wirkt und zusätzlich durch einen auf den Ventilkörper gegen den Federdruck einwirkenden Elektromagneten einstellbar ist. Das Steuerventil 24 öffnet damit einstellbar abhängig von der Druckdifferenz zwischen den beiden Arbeitsräumen 2 und 3.

Ein weiterer, nämlich ein dritter Strömungsweg 25 zur Verbindung der Arbeitsräume 2 und 3 ist ebenfalls erfindungsgemäß vorgesehen, der ein druckabhängig öffnendes und federbelastetes Ventil 26 als Arbeitsventil aufweist, welches abhängig von dem durch das Steuerventil 24 erzeugten Steuerdruck geöffnet wird. Der Steuerdruck liegt in der Leitung 27 an und wirkt gegen die Federkraft des Arbeitsventils 26, verringert diese also. Die Strömungswege 20, 22 und 25 zur Verbindung der Arbeitsräume sind, wie ersichtlich, parallel geschaltet.

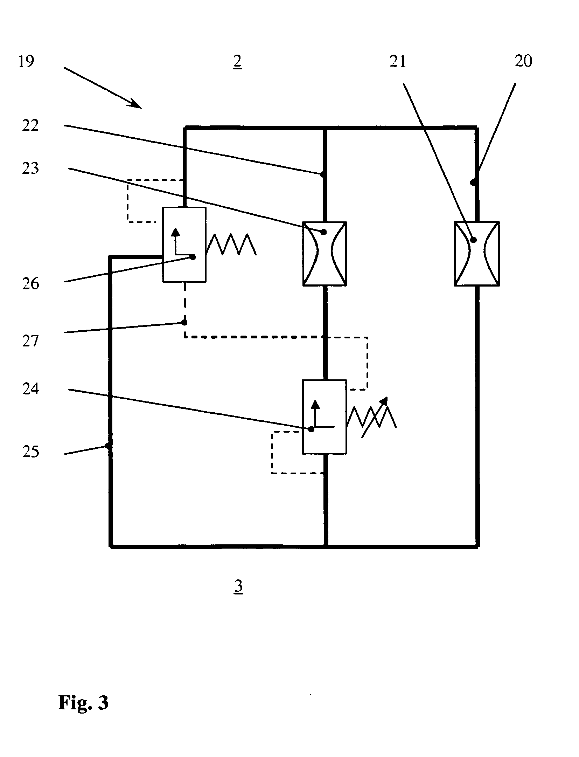

Fig. 3 zeigt hierzu noch mal die in der Fig. 2 dargestellte Ventilschaltung 19, jedoch mit anderen, in der Pneumatik gebräuchlichen Symbolen für die Ventile 24 und 26.

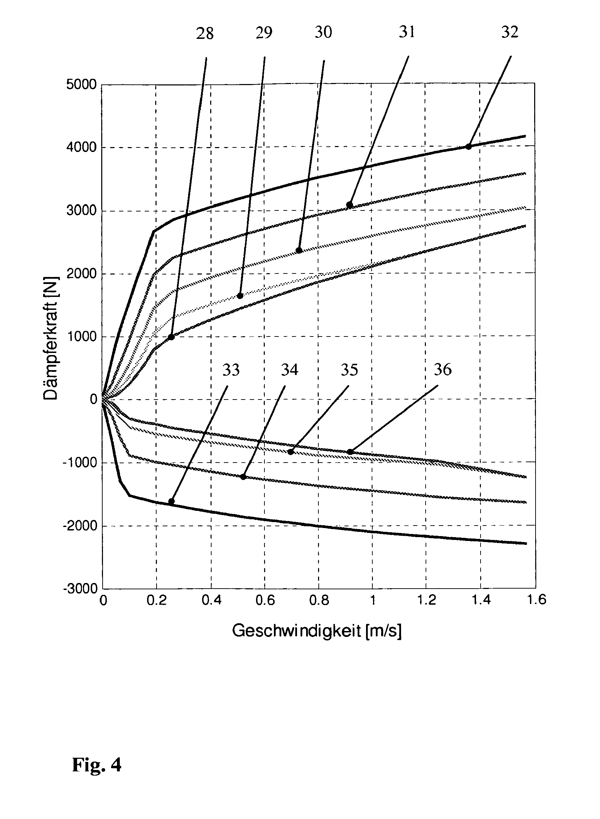

Fig. 4 zeigt die mit der erfindungsgemäßen Ventilschaltung 19 erreichbaren Dämpfungskennlinien 28 bis 32 für die Zugstufe, also für das Ausfedern, sowie die Dämpfungskennlinien 33 bis 36 für die Druckstufe, also für das Einfedern eines PKW.

### Bezugszeichenliste

### (Teil der Beschreibung)

- 1: Luftfeder- und Dämpfereinheit
- 2: Arbeitsraum (Dämpferraum)
- 3: Arbeitsraum (Federraum)
- 4: Zylindrisches Gehäuse
- 5: Kolbenstange
- 6: Kolben
- 7 - 9: Rollbalg
- 10 - 12: Fläche mit Abrollkontur
- 13: Anschlusspunkt
- 14: Federnder Anschlag
- 15: Federnder Anschlag
- 16: Federbein-Kopflager
- 17: Drosselventil (steuerbares Arbeitsventil)
- 18: Drosselventil (federbelastetes Überdruckventil)
- 19: Ventilschaltung
- 20: Erster Strömungsweg
- 21: Drosselventil
- 22: Zweiter Strömungsweg
- 23: Drosselventil
- 24: Steuerventil
- 25: Dritter Strömungsweg
- 26: Arbeitsventil
- 27: Leitung
- 28 - 32: Dämpfungskennlinien Zugstufe
- 33 - 36: Dämpfungskennlinien Druckstufe

## Patentansprüche

1. Luftfeder- und Dämpfereinheit für Fahrzeuge, wobei die Luftfeder- und Dämpfereinheit mindestens zwei mit Druckluft gefüllte Arbeitsräume (2, 3) aufweist, die jeweils mindestens teilweise durch Rollbälge begrenzt werden und die Rollbälge (7 - 9) unter Bildung einer Rollfalte mindestens teilweise auf Abrollkonturen vorgegebener und als Zylinderflächen ausgebildeter Gehäuseteile abrollen, wobei die Arbeitsräume untereinander über VentileNentilschaltungen (17, 18) verbunden sind, **dadurch gekennzeichnet, dass** innerhalb der Ventile (17, 18) mindestens jeweils
a) ein erster Strömungsweg (20) zur Verbindung der Arbeitsräume vorgesehen ist, der ein fest eingestelltes Drosselventil (21) aufweist, dass
b) ein zweiter Strömungsweg (22) zur Verbindung der Arbeitsräume (2,3) vorgesehen ist, in dem ein weiteres fest eingestelltes Drosselventil (23) und ein druckabhängig öffnendes Steuerventil (24) in Reihe geschaltet sind, wobei das Steuerventil (24) abhängig von der Druckdifferenz zwischen den beiden Arbeitsräumen (2,3) öffnet, und dass
c) ein dritter Strömungsweg (25) zur Verbindung der Arbeitsräume vorgesehen ist, der ein druckabhängig öffnendes Ventil (26) aufweist, welches abhängig von dem durch das Steuerventil (24) erzeugten Steuerdruck geöffnet wird,
wobei die Strömungswege zur Verbindung der Arbeitsräume (2,3) parallel geschaltet sind.

2. Luftfeder- und Dämpfereinheit nach Anspruch 1, **dadurch gekennzeichnet, dass** der Öffnungsdruck des druckabhängig öffnenden Steuerventils (24) einstellbar ist.

3. Luftfeder- und Dämpfereinheit nach Anspruch 2, **dadurch gekennzeichnet, dass** das Steuerventil (24) einen federbeaufschlagten Ventilkörper aufweist, wobei der Öffnungsdruck durch einen auf den Ventilkörper gegen den Federdruck einwirkenden Elektromagneten einstellbar ist.

## Claims

1. Pneumatic spring and damper unit for vehicles, the pneumatic spring and damper unit having at least two working spaces (2, 3) which are filled with compressed air and which are in each case delimited at least partially by concertinas, and the concertinas (7-9) at least partially rolling, so as to form a fold, on rolling contours of predetermined housing parts designed as cylindrical surfaces, the working spaces being connected to one another via valves/valve connections (17, 18), **characterized in that**, within the valves (17, 18), at least in each case
a) a first flow path (20) for connecting the working spaces is provided, which has a permanently set throttle valve (21), **in that**
b) a second flow path (22) for connecting the working spaces (2, 3) is provided, in which a further permanently set throttle valve (23) and a control valve (24) opening as a function of pressure are connected in series, the control valve (24) opening as a function of the pressure difference between the two working spaces (2, 3), and **in that**
c) a third flow path (25) for connecting the working spaces is provided, which has a valve (26) which opens as a function of pressure and which is opened as a function of the control pressure generated by the control valve (24),
the flow paths for connecting the working spaces (2, 3) being connected in parallel.

2. Pneumatic spring and damper unit according to Claim 1, **characterized in that** the opening pressure of the control valve (24) opening as a function of pressure is adjustable.

3. Pneumatic spring and damper unit according to Claim 2, **characterized in that** the control valve (24) has a spring-loaded valve body, the opening pressure being adjustable by means of an electromagnet acting upon the valve body counter to the spring pressure.

## Revendications

1. Unité d'amortisseur et suspension pneumatique pour véhicules, dans laquelle l'unité d'amortisseur et suspension pneumatique présente au moins deux chambres de travail (2, 3) remplies d'air comprimé, qui sont à chaque fois limitées au moins en partie par des soufflets roulants et les soufflets roulants (7-9) roulent en formant un pli de roulement au moins en partie sur des contours de roulement de pièces de boîtier prédéfinies et réalisées sous forme de surfaces cylindriques, les chambres de travail étant reliées les unes aux autres par le biais de soupapes/branchements de soupapes (17, 18),
**caractérisée en ce qu**'à l'intérieur des soupapes (17, 18) sont prévues, au moins à chaque fois :
a) une première voie d'écoulement (20) pour la liaison des chambres de travail (2, 3), laquelle présente une soupape d'étranglement (21) ajustée fixement,
b) une deuxième voie d'écoulement (22) pour la liaison des chambres de travail (2, 3), dans laquelle une soupape d'étranglement (23) supplémentaire ajustée fixement et une soupape de commande (24) s'ouvrant en fonction de la pression sont branchées en série, la soupape de commande (24) s'ouvrant en fonction de la différence de pression entre les deux chambres de travail (2, 3), et à chaque fois
c) une troisième voie d'écoulement (25) pour la liaison des chambres de travail, qui présente une soupape (26) s'ouvrant en fonction de la pression, laquelle est ouverte en fonction de la pression de commande produite par la soupape de commande (24),
les voies d'écoulement pour la liaison des chambres de travail (2, 3) étant branchées en parallèle.

2. Unité d'amortisseur et suspension pneumatique selon la revendication 1, **caractérisée en ce que** la pression d'ouverture de la soupape de commande (24) s'ouvrant en fonction de la pression est ajustable.

3. Unité d'amortisseur et suspension pneumatique selon la revendication 2, **caractérisée en ce que** la soupape de commande (24) présente un corps de soupape sollicité par ressort, la pression d'ouverture pouvant être ajustée par un électroaimant agissant sur le corps de soupape à l'encontre de la pression de ressort.
